(19) **Europäisches Patentamt / European Patent Office / Office européen des brevets**

(11) **EP 3 771 879 B1**

(12) **FASCICULE DE BREVET EUROPEEN**

(45) Date de publication et mention de la délivrance du brevet:
**19.04.2023 Bulletin 2023/16**

(21) Numéro de dépôt: **20188739.5**

(22) Date de dépôt: **30.07.2020**

(51) Classification Internationale des Brevets (IPC):
**F28G 15/00** (2006.01)  **G01B 21/08** (2006.01)

(52) Classification Coopérative des Brevets (CPC):
**F28G 15/00; F28G 15/003; G01B 21/085**

(54) **DISPOSITIF DE DÉTECTION ET DE CARACTÉRISATION D'UN ENCRASSEMENT APTE À SE FORMER SUR UNE PAROI SOUMISE À UN ÉCHANGE THERMIQUE**

VORRICHTUNG ZUM ENTDECKEN UND CHARAKTERISIEREN EINER VERSCHMUTZUNG, DIE SICH AUF EINER WAND BILDEN KANN, DIE EINEM WÄRMEAUSTAUSCH AUSGESETZT IST

DEVICE FOR DETECTING AND CHARACTERISING CLOGGING LIKELY TO FORM IN A WALL SUBJECTED TO HEAT EXCHANGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.08.2019 FR 1908834**

(43) Date de publication de la demande:
**03.02.2021 Bulletin 2021/05**

(73) Titulaire: **Commissariat à l'énergie atomique et aux énergies alternatives**
**75015 Paris (FR)**

(72) Inventeurs:
• **DUCROS, Frédéric**
**38054 Grenoble CEDEX 09 (FR)**
• **LEMAIRE, Olivier**
**38054 Grenoble CEDEX 09 (FR)**
• **MEMPONTEIL, Alain**
**38054 Grenoble CEDEX 09 (FR)**
• **MINVIELLE, Zoé**
**38054 Grenoble CEDEX 09 (FR)**

(74) Mandataire: **Brevalex**
**Tour Trinity**
**1 Bis Esplanade de La Défense**
**CS 60347**
**92035 Paris La Défense Cedex (FR)**

(56) Documents cités:
**WO-A1-2007/099240    WO-A1-2016/198787**
**FR-A1- 2 900 459**

**Description**

**DOMAINE TECHNIQUE**

La présente invention se rapporte au domaine de l'encrassement de parois soumises à des échanges thermiques, et particulièrement à la détection et la quantification de l'encrassement formé sur de telles parois.

L'invention peut être mise en oeuvre pour de nombreuses applications industrielles dans lesquelles des transferts thermiques ont lieu et dans lesquelles les parois soumises à ces transferts thermiques subissent des phénomènes d'encrassement, notamment dans les domaines industriels de l'agroalimentaire, de la chimie, de l'énergie, dont le secteur pétrolier et le secteur des transports, du froid, de la climatisation, entre autres. Elle s'applique tout particulièrement au secteur industriel du « vide ». Plus spécifiquement, l'invention peut s'appliquer à une pompe à vide soumise à un encrassement ou tout autre dispositif sous vide soumis à un encrassement.

Il faut noter que, dans la présente invention, le terme « encrassement » désigne tout phénomène générant un dépôt de matière indésirable sur une paroi soumise à un transfert thermique. L'encrassement comprend donc aussi le phénomène de givrage, entre autres.

L'invention propose ainsi un dispositif de détection et de caractérisation d'un encrassement apte à se former sur une paroi soumise à un échange thermique, un ensemble comportant un composant pourvu d'une paroi soumise à un échange thermique et un tel dispositif, ainsi qu'un procédé de détection et de caractérisation d'un encrassement associé.

**ÉTAT DE LA TECHNIQUE ANTÉRIEURE**

La simple mesure de quantités physiques aux bornes d'un échangeur thermique, telles que la pression, la température en entrée et/ou en sortie, le débit, etc., ou encore plus généralement d'un composant siège de transfert thermique et/ou de matière, permet de quantifier la performance moyenne globale. Toutefois, cela ne permet pas d'avoir des indications sur la qualité de l'échange thermique local, ni sur l'état de la paroi et sur la présence éventuelle d'encrassement.

Pour obtenir ce type d'indication locale, il faut prévoir et mettre en oeuvre des dispositifs locaux. De nombreux dispositifs sont dédiés à la mesure directe ou indirecte des flux thermiques et/ou de températures locales et par là même permettent d'obtenir le coefficient d'échange thermique local, et donc de donner des indications sur le fonctionnement des dispositifs.

Il existe déjà dans l'art antérieur des dispositifs permettant de donner des indications sur la présence d'encrassement. La demande internationale WO 2009/153323 A1 décrit par exemple la quantification de l'encrassement par une mesure de la résistance thermique que constitue la couche d'encrassement. La demande internationale WO 2007/099240 A1 divulgue l'implantation d'un dispositif d'encrassement dans un échangeur thermique à plaques selon le préambule de la revendication 1.

Certains dispositifs permettent la détermination de résistances thermiques locales d'encrassement, symbolisées par $Rth_{-enc}$ et exprimées en $m^2.K.W^{-1}$, et donc du rapport entre l'épaisseur de l'encrassement, symbolisée par $e_{-enc}$ et exprimée en m, et sa conductivité thermique, symbolisée par $\lambda_{-enc}$ et exprimée en $W.m^{-1}.K^{-1}$, soit $Rth_{-enc} = (e_{-enc} / \lambda_{-enc})$. Alors, par exemple, par le biais d'une comparaison avec la valeur connue lorsque le dispositif est neuf ou parfaitement propre, il peut être possible de statuer sur un éventuel encrassement. L'avantage de tels dispositifs est qu'ils ne sont pas intrusifs, pour la plupart, ce qui est important pour ne pas perturber l'éventuel écoulement et donc les conditions de dépôt. Connaissant la conductivité thermique du dépôt, la valeur de la résistance peut être traduite en une épaisseur d'encrassement.

Cependant, il subsiste plusieurs inconvénients. La connaissance de l'épaisseur d'encrassement reste indirecte car elle dépend de la connaissance de la valeur de la conductivité thermique. De même, la connaissance de la valeur de la conductivité thermique de l'encrassement reste indirecte car elle dépend de la connaissance de la valeur de l'épaisseur de l'encrassement. De plus, une grande partie des procédés décrits dans l'art antérieur n'est pas judicieuse lorsque l'encrassement prend place dans un environnement thermique isolant (par exemple, un fluide thermiquement peu conducteur; un environnement de vide partiel ou poussé), ou du moins dont l'isolation thermique est supérieure ou proche de celle causée par l'encrassement.

**EXPOSÉ DE L'INVENTION**

L'invention a donc pour but de répondre aux besoins de détection en remédiant au moins partiellement aux inconvénients relatifs aux réalisations de l'art antérieur.

Plus précisément, l'invention vise à permettre la détection et la caractérisation de la présence d'encrassement, pouvant par exemple être formé par du givre se développant sur des parois soumises à des échanges thermiques.

L'invention a ainsi pour objet, selon l'un de ses aspects, un dispositif de détection et de caractérisation d'un encrassement apte à se former sur au moins une paroi d'un composant, soumise à un ou plusieurs échanges thermiques, caractérisé en ce qu'il comporte :

-    un unique premier moyen ou un nombre N de premiers moyens de dépôt d'énergie et de mesure de température, N étant un nombre entier supérieur ou égal 2,
-    un nombre N de deuxièmes moyens de mesure de température,

l'unique premier moyen étant associé à chacun des N deuxièmes moyens pour former N couples d'écartement du dispositif, ou chaque premier moyen des N premiers moyens étant associé deux à deux à un deuxième moyen des N deuxièmes moyens pour former un couple d'écartement et ainsi un total de N couples d'écartement,

l'unique premier moyen étant associé à N premiers corps ou chaque premier moyen des N premiers moyens étant associé deux à deux à un premier corps de N premiers corps, chaque deuxième moyen des N deuxièmes moyens étant associé à un unique deuxième corps ou deux à deux à un deuxième corps de N deuxièmes corps,

les premiers corps étant solidaires et en contact direct avec une première paroi du composant, soumise à un ou plusieurs échanges thermiques, sur laquelle un encrassement est apte à se former, et le ou les deuxièmes corps étant sans contact direct avec ladite première paroi,

pour chaque couple d'écartement, le premier corps et le deuxième corps, respectivement associés au premier moyen du couple d'écartement et au deuxième moyen du couple d'écartement étant séparés d'une distance prédéfinie non nulle, de sorte que les premiers corps sont à distance du ou des deuxièmes corps,

les N distances prédéfinies, associées au N couples d'écartement, étant croissantes ou décroissantes,

le ou les premiers moyens et les deuxièmes moyens étant raccordés à au moins un dispositif d'alimentation électrique, au moins un dispositif d'acquisition de données et au moins un dispositif de supervision globale pour la détection et la caractérisation de l'encrassement formé.

De façon avantageuse, lesdites N distances prédéfinies, associées au N couples d'écartement, sont croissantes ou décroissantes de manière à ce que les écartements entre premiers corps et deuxième(s) corps des N couples d'écartement soient tous différents. En variante, certains écartements entre premiers corps et deuxième(s) corps peuvent être identiques, notamment afin de s'assurer de la reproductibilité de la valeur. Préférentiellement, au moins trois, voire quatre, voire cinq, voire six, valeurs d'écartements différentes existent.

Grâce à l'invention, il peut être possible de détecter et de caractériser un encrassement formé sur une paroi soumise à un échange thermique par le biais d'un dispositif permettant de déterminer finement les conditions thermiques environnant la paroi. La comparaison des données obtenues avec celles correspondant à une situation thermique saine, dépourvue d'encrassement, peut permettre de déduire des valeurs souhaitées de paramètres d'encrassement.

Le dispositif selon l'invention peut en outre comporter l'une ou plusieurs des caractéristiques suivantes prises isolément ou suivant toutes combinaisons techniques possibles.

Le ou les premiers corps peuvent être préférentiellement isolés thermiquement de ladite première paroi.

Ladite première paroi du composant peut par exemple comporter un matériau métallique tel que l'aluminium et/ou l'acier.

Les premiers corps et/ou le ou les deuxièmes corps peuvent également comporter un matériau métallique tel que l'aluminium et/ou l'acier.

Le ou les premiers moyens peuvent comporter au moins un élément chauffant et au moins une sonde de température, notamment de type sonde platine, et les deuxièmes moyens peuvent comporter au moins une sonde de température, notamment de type sonde platine.

Par ailleurs, lesdits au moins un dispositif d'alimentation électrique, au moins un dispositif d'acquisition de données et au moins un dispositif de supervision globale peuvent être configurés pour permettre des alimentations électriques indépendantes, des mesures de température indépendantes et des générations d'énergie, notamment de puissance, indépendantes pour les N couples d'écartement.

Chaque premier corps peut être constitué par une première branche dont la longueur est inférieure à celle de ladite première paroi, et/ou chaque deuxième corps peut être constitué par une deuxième branche, chaque deuxième moyen des N deuxièmes moyens étant associé deux à deux à un deuxième corps de N deuxièmes corps.

Chaque premier corps peut être constitué par une première branche et chaque deuxième corps peut être constitué par une deuxième branche, chaque couple d'écartement étant ainsi associé à un couple de première et deuxième branches espacées d'une distance prédéfinie.

En outre, le dispositif peut comporter un unique premier moyen formant un seul et unique premier ensemble de dépôt d'énergie et de mesure de température commun à tous les couples d'écartement.

Selon une variante de l'invention, les premiers corps peuvent être formés par ladite première paroi.

Le ou les deuxièmes corps peuvent être solidaires et en contact direct avec une deuxième paroi du composant, distincte et opposée à la première paroi, soumise à un ou plusieurs échanges thermiques, sur laquelle un encrassement est apte à se former, le ou les deuxièmes corps étant notamment formés par ladite deuxième paroi.

Par ailleurs, les premiers corps et/ou le ou les deuxièmes corps peuvent être séparés entre eux par le biais de matériau isolant thermiquement.

L'invention a également pour objet, selon un autre de ses aspects, un ensemble, caractérisé en ce qu'il comporte :

- un composant, notamment un échangeur thermique, dont au moins une paroi est soumise à un ou plusieurs échanges thermiques,

- un dispositif tel que défini précédemment.

En outre, l'invention a aussi pour objet, selon un autre de ses aspects, un procédé de détection et de caractérisation d'un encrassement apte à se former sur au moins une paroi d'un composant, soumise à un ou plusieurs échanges thermiques, caractérisé en ce qu'il est mis en oeuvre au moyen d'un dispositif tel que défini précédemment, et en ce qu'il comporte les étapes suivantes, préférentiellement simultanées :

a) effectuer un dépôt d'énergie, notamment un dépôt de puissance par effet Joule, par le biais du ou des premiers moyens,
b) effectuer une mesure de température par le biais des deuxièmes moyens,
c) détecter une variation dans les mesures de température effectuées par les deuxièmes moyens pour chaque couple d'écartement,
d) à partir de la détection de variation de température, déterminer une plage de valeurs de l'épaisseur de l'encrassement.

Le procédé peut par ailleurs comporter, entre les étapes a) et b), simultanément ou non avec l'étape b), l'étape suivante :

b') effectuer une mesure de température par le biais des premiers moyens, et le procédé peut aussi comporter, entre les étapes b) et d), simultanément ou non avec l'étape c), l'étape suivante :
c') détecter un écart de température pour chaque couple d'écartement entre la température mesurée par le biais du ou des premiers moyens et la température mesurée par le biais des deuxièmes moyens.

En outre, le procédé peut comporter, après l'étape d), l'étape suivante :
e) déterminer une plage de valeurs de la conductivité thermique de l'encrassement.

**BRÈVE DESCRIPTION DES DESSINS**

L'invention pourra être mieux comprise à la lecture de la description détaillée qui va suivre, d'exemples de mise en oeuvre non limitatifs de celle-ci, ainsi qu'à l'examen des figures, schématiques et partielles, du dessin annexé, sur lequel :

[Fig. 1] illustre, partiellement et en coupe, un détail de réalisation d'un dispositif conforme à l'invention,
[Fig. 2] illustre, partiellement et en coupe, le dispositif de [Fig. 1],
[Fig. 3] illustre, partiellement et en coupe, un autre exemple de dispositif conforme à l'invention,
[Fig. 4] illustre, partiellement et en coupe, un autre exemple de dispositif conforme à l'invention utilisé avec un composant pourvu de parois soumises à des échanges thermiques et sur lesquelles se forme un encrassement,
[Fig. 5] illustre, partiellement et schématiquement, la répartition de températures T1 à T4 et T'1 à T'4 pour un dispositif du type de [Fig. 2],
[Fig. 6] illustre, partiellement et schématiquement, la répartition de températures T1 à T4 et T'1 à T'4 pour un dispositif du type de [Fig. 3], et
[Fig. 7] et [Fig. 8] illustrent, partiellement et schématiquement, des variantes de réalisation de dispositifs conformes à l'invention.

Dans l'ensemble de ces figures, des références identiques peuvent désigner des éléments identiques ou analogues.
De plus, les différentes parties représentées sur les figures ne le sont pas nécessairement selon une échelle uniforme, pour rendre les figures plus lisibles.

**EXPOSÉ DÉTAILLÉ DE MODES DE RÉALISATION PARTICULIERS**

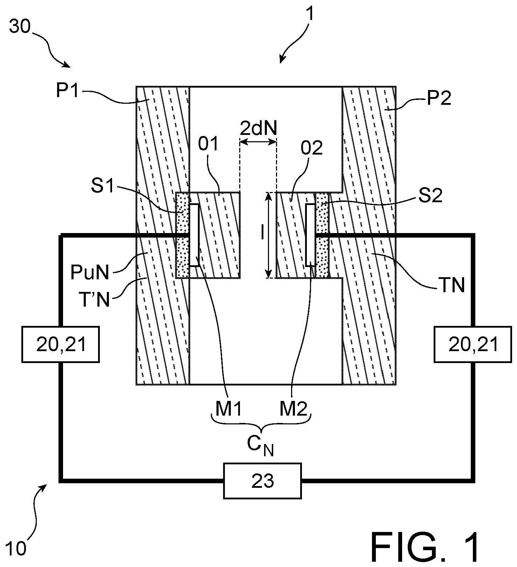

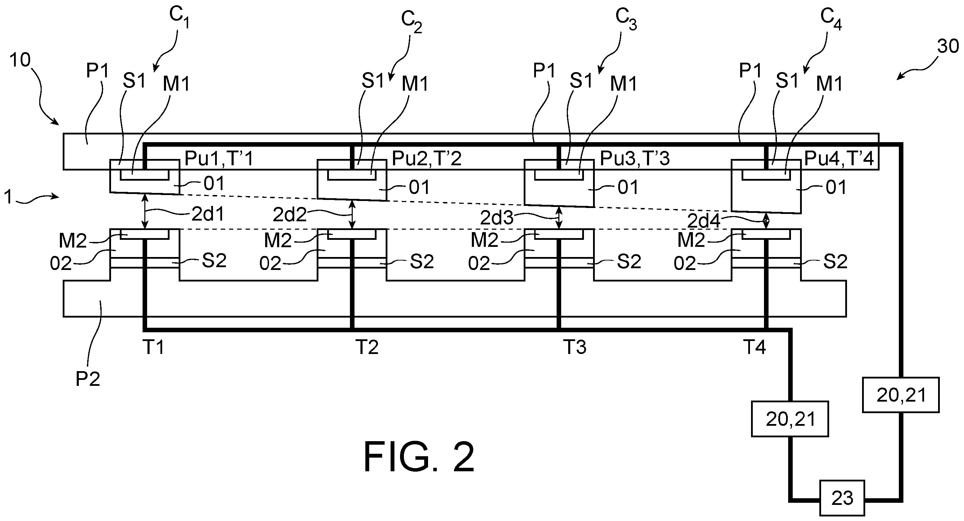

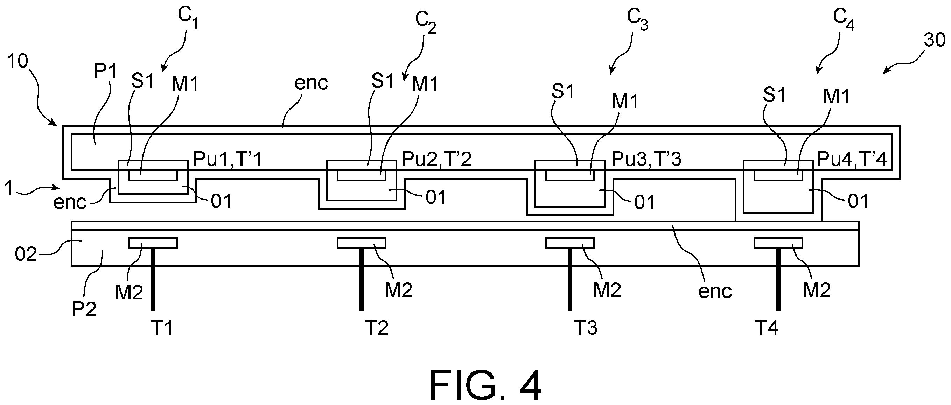

Les figures 1 et 2 illustrent, schématiquement et partiellement, un premier exemple de réalisation d'un dispositif 1 de détection et de caractérisation d'un encrassement *enc.*
Le dispositif 1 est intégré à un ensemble 30 comportant un échangeur thermique 10 et le dispositif 1. Dans cet exemple, l'échangeur thermique 10 comporte deux parois P1 et P2 soumises à des échanges thermiques. Une couche d'encrassement *enc* est susceptible de se former sur les parois P1, P2, cet encrassement *enc* pouvant le cas échéant être du givre, comme visible par exemple sur la figure 4.
Le dispositif 1 conforme à l'invention repose sur le principe d'un couple d'écartement $C_N$ qui comprend un premier moyen M1 de dépôt d'énergie et de mesure de température et un deuxième moyen M2 de mesure de température, comme visible sur la figure 1.
Sur la figure 1, un seul couple d'écartement $C_N$ est représenté, formant un motif de base, qui est dupliqué plusieurs fois pour former le dispositif 1 conforme à l'invention, comme selon la représentation de la figure 2.
Ainsi, le dispositif 1 comporte N couples d'écartement $C_1$, ..., $C_N$, N étant un nombre entier supérieur ou égal à 2, chaque couple comprenant un premier moyen M1 associé à un deuxième moyen M2.
Dans ce premier exemple des figures 1 et 2, le dispositif 1 comporte quatre couples d'écartement $C_1$, $C_2$, $C_3$ et $C_4$.
Pour chaque couple d'écartement $C_N$ donné, le premier moyen M1 est intégré dans un premier corps O1, préférentiellement constitué du même matériau que celui de la paroi P1 sur laquelle le premier corps O1 est situé, et le deuxième moyen M2 est intégré dans un deuxième corps O2, préférentiellement constitué du même matériau que celui de la paroi P2 sur laquelle le deuxième corps O2 est situé. Avantageusement, le matériau constitutif des premier O1 et deuxième O2 corps n'est pas un matériau isolant thermiquement.

Dans cet exemple des figures 1 et 2, les premier O1 et deuxième O2 corps s'apparentent à des branches positionnées respectivement sur les première P1 et deuxième P2 parois de l'échangeur thermique 10, et qui sont donc en face-à-face l'une de l'autre. Une couche d'encrassement *enc* est susceptible de se développer sur ces branches O1, O2.

De façon préférentielle, chacun des premier O1 et deuxième O2 corps est isolé thermiquement du restant de l'échangeur thermique 10. En particulier, un corps isolant thermiquement S1 est situé entre le premier corps O1 et la première paroi P1, et un corps isolant thermiquement S2 est situé entre le deuxième corps O2 et la deuxième paroi P2.

Le corps isolant thermiquement S1 et/ou le corps isolant thermiquement S2 peuvent par exemple se présenter sous la forme de cavités, par exemple remplies d'air, ou encore être formés par un matériau céramique, avec une conductivité thermique de l'ordre de 1 $W.m^{-1}.K^{-1}$.

De plus, la longueur I, visible sur la figure 1, de chacun des premier O1 et deuxième O2 corps est inférieure à la longueur des première P1 et deuxième P2 parois. Cette longueur I constitue la dimension typique des première O1 et deuxième O2 branches. Elle est libre et adaptable selon les conditions d'intégration à l'échangeur thermique 10. Elle est avantageusement choisie pour ne pas créer des conditions d'encrassement particulières. Elle est par exemple de l'ordre de 1 cm.

Par ailleurs, pour chaque couple d'écartement $C_N$ donné, le premier corps O1 et le deuxième corps O2 sont séparés d'une distance prédéfinie $2d_N$, comme visible sur la figure 1. Cette distance prédéfinie $2d_N$ est par exemple comprise entre 0,5 mm et 5 cm. Un espace libre est donc laissé entre ces premier O1 et deuxième O2 corps.

Pour le dispositif 1 en totalité, comme représenté à la figure 2, les N distances prédéfinies $2d_1$, ..., $2d_N$, associées au N couples d'écartement $C_1$, ..., $C_N$, sont croissantes ou décroissantes de manière à ce que les écartements entre premier corps O1 et deuxième corps O2 des N couples d'écartement $C_1$, ..., $C_N$ soient tous différents. Il est à noter que, au lieu d'être tous différents, il peut être possible d'avoir certains des écartements qui soient identiques. Ceci peut en particulier permettre de s'assurer de la reproductibilité de la valeur.

Plus précisément, dans l'exemple de la figure 2, les quatre couples d'écartement $C_1$, $C_2$, $C_3$ et $C_4$ sont respectivement associés à quatre distances $2d_1$, $2d_2$, $2d_3$ et $2d_4$. Ces quatre distances $2d_1$, $2d_2$, $2d_3$ et $2d_4$ sont décroissantes, à savoir que la distance $2d_1$ est supérieure à la distance $2d_2$, laquelle est supérieure à la distance $2d_3$, laquelle est supérieure à la distance $2d_4$. Par exemple, les quatre distances $2d_1$, $2d_2$, $2d_3$ et $2d_4$ varient de 1 mm à 1,1 cm, par pas de 2,5 mm, et sont équiréparties sur une longueur globale de 10 cm.

La décroissance des distances $2d_1$, $2d_2$, $2d_3$ et $2d_4$, sur la figure 2, permet un suivi géométrique comme indiqué par les lignes en traits pointillés.

Aussi, de façon avantageuse, le dispositif 1 conforme à l'invention s'apparente à une sonde à multi-écartements qui va permettre la détection et la caractérisation de l'encrassement *enc*.

Chaque premier moyen M1 comporte un élément de dépôt d'énergie thermique, tel qu'un élément chauffant, permettant de générer une puissance thermique PuN. L'élément chauffant peut par exemple être tout élément permettant un effet joule, tel que platine, tungstène, entre autres. De plus, chaque premier moyen M1 comporte une sonde de mesure de température locale T'N, par exemple une sonde platine ou acier.

Chaque deuxième moyen M2 comporte également une sonde de mesure de température locale TN, par exemple une sonde platine ou acier.

Ainsi, dans le dispositif 1 de la figure 2, les quatre premiers moyens M1 permettent de générer des puissances Pu1, Pu2, Pu3 et Pu4 et de mesurer quatre températures T'1, T'2, T'3 et T'4. De même, les quatre deuxièmes moyens M2 permettent de mesurer quatre température T1, T2, T3 et T4.

Ces premiers M1 et deuxièmes moyens M2 sont raccordés à des dispositifs d'alimentation électrique 20, des dispositifs d'acquisition de données 21, comprenant notamment un dispositif de mesure de tension, et un dispositif de supervision globale 23, tel qu'un ordinateur ou autre dispositif électronique spécialisé. De cette façon, il est possible de réaliser la détection et la caractérisation de l'encrassement *enc* formé.

Il est à noter que les premier M1 et deuxième M2 moyens positionnés en face l'un de l'autre peuvent comporter une même sonde de mesure de température, par exemple une même sonde platine, lesquelles peuvent être raccordées à un même appareillage de mesure de tension.

Par ailleurs, dans cet exemple, les dispositifs d'alimentation électrique 20, les dispositifs d'acquisition de données 21 et le dispositif de supervision globale 23 sont configurés pour permettre des alimentations électriques indépendantes et coordonnées, des mesures de température T1 à T4 et T'1 à T'4 indépendantes et des générations de puissance Pu1 à Pu4 indépendantes pour les quatre couples d'écartement $C_1$, $C_2$, $C_3$ et $C_4$. Il est ainsi possible de dégager des puissances Pu1 à Pu4 variables et différentes en fonction du temps dans chaque élément chauffant des premiers moyens M1 en fonction de stratégies à définir.

Le dispositif 1 décrit en référence aux figures 1 et 2 constitue une sonde multi-écartements de référence. Il peut être intégré à l'échangeur thermique 10 de l'ensemble 30 dans un environnement encrassant typique du génie des procédés.

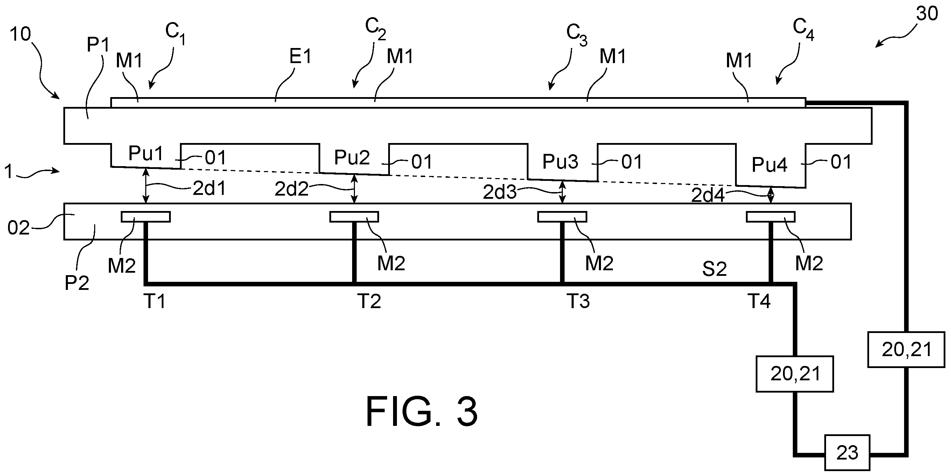

La figure 3 illustre par ailleurs un deuxième exemple de dispositif 1 conforme à l'invention qui constitue une sonde multi-écartements simplifiée.

Selon cet exemple de réalisation, un unique premier moyen M1 forme un seul et unique premier ensemble E1 de dépôt d'énergie et de mesure de température commun à tous les couples d'écartement $C_1$, ..., $C_N$. Autrement dit, un seul et unique premier ensemble E1, formé ici sur la portion supérieure de la première paroi P1, permet de dégager une puissance thermique P qui se répartit dans les quatre premiers corps O1. Les valeurs des puissances locales Pu1 à Pu4 sont alors inconnues et seules les températures T1 à T4 sont accessibles.

Par ailleurs, un seul deuxième corps O2 est ici utilisé qui est formé par la deuxième paroi P2. Autrement dit, aucune branche ne s'étend depuis la deuxième paroi P2, contrairement à l'exemple de réalisation des figures 1 et 2.

La figure 4 illustre la formation d'une couche d'encrassement *enc* avec l'utilisation d'un dispositif 1 semblable à celui de la figure 3, hormis le fait que les premiers moyens M1 sont ici différenciés et ne correspondent pas à un unique premier moyen formant un seul et unique premier ensemble E1.

Lors du dépôt d'une couche d'encrassement *enc,* la situation évolue entre un état non encrassé et divers états où l'encrassement a comblé ou non l'espace entre les premiers O1 et deuxièmes O2 corps. Ainsi, sur la figure 4, l'encrassement *enc* a totalement comblé l'espace d'une distance $2d_4$ entre le premier corps O1 et le deuxième corps O2 du quatrième couple d'écartement $C_4$.

On va maintenant décrire un principe de fonctionnement du procédé de détection et de caractérisation de l'encrassement *enc* à l'aide d'un dispositif 1 selon l'invention. Dans cet exemple, le dispositif 1 est supposé intégré à un milieu très peu conductif, par exemple un milieu céramique, ou un vide partiel poussé.

De façon générale, une première étape a) est mise en oeuvre dans laquelle on effectue un dépôt d'énergie, et précisément ici de puissance par effet Joule, par le biais du ou des premiers moyens M1. Puis, une étape b) permet la mesure de température T1, T2, T3, T4 par le biais des deuxièmes moyens M2. Ensuite, une étape c) permet de détecter une variation dans les mesures de température T1, T2, T3, T4 effectuées par les deuxièmes moyens M2 pour chaque couple d'écartement $C_1$, ..., $C_N$. Enfin, une étape d) permet de déterminer une plage de valeurs de l'épaisseur $e_{-enc}$ de l'encrassement *enc.*

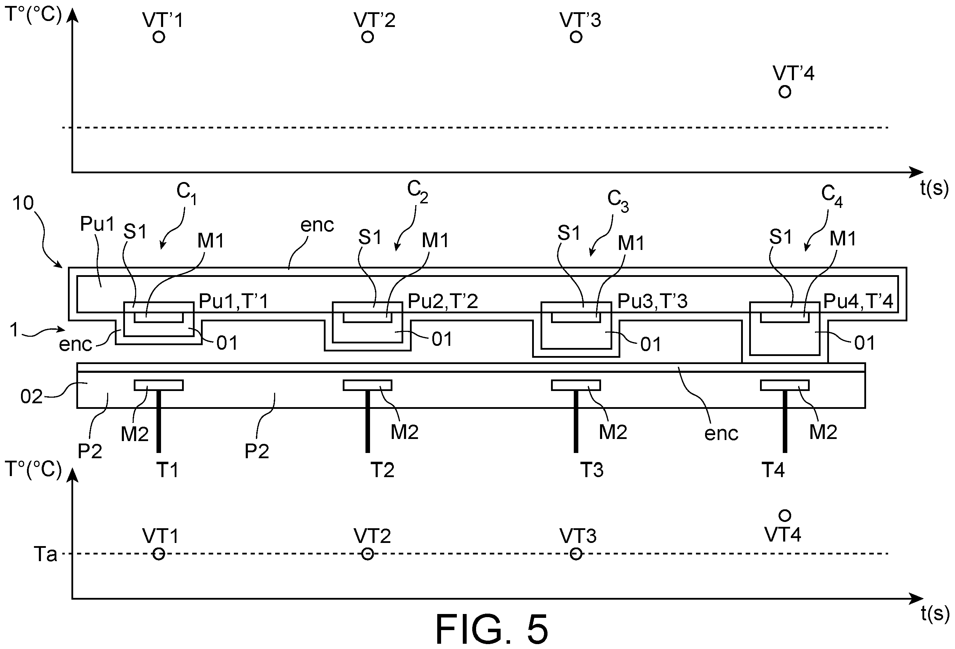

Le procédé va tout d'abord être décrit pour un dispositif 1 de type de celui de la figure 4, repris sur la figure 5, qualifié de sonde multi-écartements de référence dans la mesure où des premiers moyens M1 distincts sont utilisés, à l'inverse d'un dispositif 1 qualifié de sonde multi-écartements simplifiée comme selon l'exemple de la figure 3 où un unique premier moyen M1 existe sous forme d'un ensemble E1.

Ainsi, dans le cas d'une sonde multi-écartements de référence comme selon la figure 4, des dépôts de puissance Pu1, Pu2, Pu3, Pu4 par effet Joule sont effectués au cours d'une étape a).

L'étape b) permet alors la mesure des températures T1, T2, T3 et T4 et l'étape b') permet la mesure des températures T'1, T'2, T'3 et T'4 au cours du temps jusqu'à l'obtention d'un régime permanent associé à une mesure stabilisée.

Sur la figure 5, on a représenté, en partie supérieure, un graphique de température T°, exprimée en degrés Celsius (°C), donnant les valeurs VT'1, VT'2, VT'3 et VT'4 des températures T'1, T'2, T'3 et T'4 fournies par les premiers moyens M1, ces valeurs étant obtenues après un temps donné t, exprimé en secondes (s), une fois l'obtention du régime permanent associé à une mesure stabilisée obtenu, pour les quatre couples d'écartement $C_1$, $C_2$, $C_3$ et $C_4$. En partie inférieure, on visualise un graphique de température T°, exprimée en degrés Celsius (°C), donnant les valeurs VT1, VT2, VT3 et VT4 des températures T1, T2, T3 et T4 fournies par les deuxièmes moyens M2, ces valeurs étant obtenues après un temps donné t, exprimé en secondes (s), une fois l'obtention du régime permanent associé à une mesure stabilisée obtenu, pour les quatre couples d'écartement $C_1$, $C_2$, $C_3$ et $C_4$.

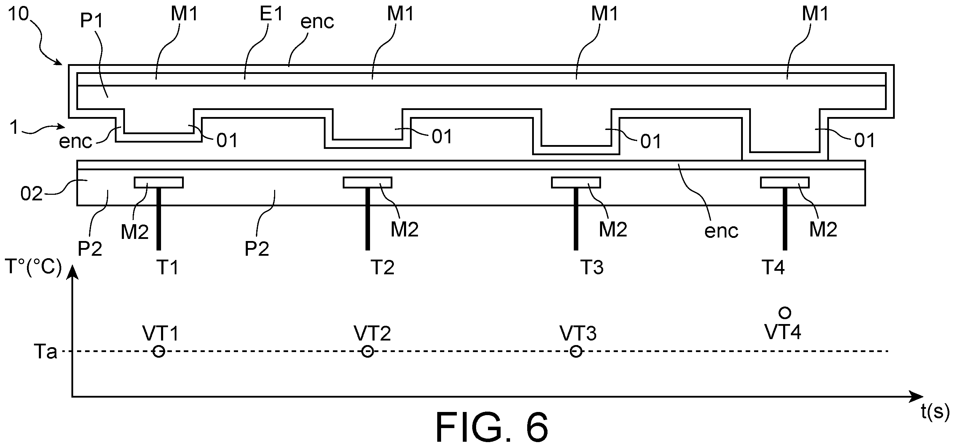

Il est à noter que, sur les figures 5 et 6, les lignes en traits pointillés représentent la température ambiante Ta.

On observe alors, au cours d'une étape c), que la valeur VT4 de la température T4 subit une importante variation, et au cours d'une étape c'), que l'écart entre la valeur VT'4 de la température T'4 et la valeur VT4 de la température T4 subit une important variation en comparaison avec les écarts de valeurs VT'3-VT3, VT'2-VT2 et VT'1-VT1, ce qui implique la présence d'un encrassement *enc* qui peut être caractérisé. En effet, la simple variation de température mesurée par les deuxièmes moyens M2, à savoir le fait que VT4 change brusquement alors que VT1, VT2 et VT3 sont constants, permet de détecter la présence d'un encrassement *enc.* L'épaisseur $e_{-enc}$ de l'encrassement *enc* peut être déterminée au cours d'une étape d) et se trouve être telle que $d_4 < e_{-enc} < d_3$.

De façon plus générale, si la variation de température mesurée par les deuxièmes moyens M2 se produit pour un changement brusque de valeur VTN d'une température TN, alors on aura la relation suivante : $d_N < e_{-enc} < d_{N-1}$.

Dans l'exemple de la figure 5, il est en plus possible d'accéder aux températures T'1, T'2, T'3 et T'4 mesurées par les premiers moyens M1.

Aussi, une étape e) permet en outre la détermination d'une plage de valeurs de la conductivité thermique $\lambda_{-enc}$ de l'encrassement *enc* du fait de la relation connue $Rth_{-enc} = (e_{-enc} / \lambda_{-enc})$, et de la connaissance de la résistance $Rth_{-enc}$.

En effet, pour chaque couple d'écartement $C_N$, le flux thermique $\Phi_N$, exprimé en W, dégagé par chaque élément chauffant de chaque premier moyen M1 passe préférentiellement dans la direction non occultée par les corps isolants thermiquement S1, de sorte que l'équilibre pour chaque couple $C_N$ se traduit en situation monodimensionnelle par la relation :

$$\Phi_N = [T'_N - T_N] / [R_S + Rth_{-enc} + R_{2d}],$$

dans laquelle :

$T_N$ représente la température mesurée par le deuxième moyen M2 au niveau du couple $C_N$,
$T'_N$ représente la température mesurée par le premier moyen M1 au niveau du couple $C_N$,
Rs représente la contribution à la résistance thermique locale du dispositif 1,
$Rth_{-enc}$ représente la résistance thermique locale d'encrassement, et
$R_{2d}$ représente la contribution à la résistance thermique de l'espace libre entre un premier corps O1 et un deuxième corps O2.

Ainsi, connaissant le flux thermique $\Phi_N$ déposé et les températures $T_N$ et $T'_N$, la somme des résistances est connue, soit donc la somme $R_S + Rth_{-enc} + R_{2d}$, soit en définitif la somme $Rth_{-enc} + R_{2d}$ car la résistance $R_S$ est connue et mesurée lors de la construction du dispositif 1.

Par ailleurs, en supposant que la résistance $R_{2d}$ est différente de la résistance $Rth_{-enc}$, ceci implique que tout comblement de l'espace inter-corps 01, 02, entraînera une variation notoire des températures $T_N$ et $T'_N$.

Ainsi, dans le cas par exemple où $R_{2d} > Rth_{-enc}$, ce qui est par exemple le cas des vides partiels, la température $T_N$ du couple $C_N$ où la distance $2_{dN}$ va être comblée par l'encrassement *enc* va augmenter, alors que la température $T'_N$ va diminuer, le tout conduisant à une différence de température $T'_N - T_N$ en diminution.

Ce cas est celui illustré sur la figure 5 et l'on constate une diminution de la température $T'_N$, une augmentation de la température $T_N$ et une diminution de la différence $T'_N - T_N$.

Dans le cas inverse où $R_{2d} < Rth_{-enc}$, les tendances réciproques se retrouveront.

En conséquence de la connaissance du comblement de l'espace inter-corps O1, O2 au niveau du quatrième couple $C_4$ par l'encrassement *enc,* détecté par le biais de la variation des températures $T_N$ et $T'_N$, il est possible d'encadrer l'épaisseur d'encrassement $e_{-enc}$ associée aux températures consécutives $T'_N$ et $T'_{N+1}$ marquant un encrassement, soit donc : $d_{N+1} < e_{-enc} < d_N$, pour un encrassement détecté au couple $C_{N+1}$. Dans le cas présent, $d_4 < e_{-enc} < d_3$.

Par ailleurs, par le biais de la relation au premier ordre $Rth_{-enc} = (e_{-enc} / \lambda_{-enc})$, il est possible d'en déduire un encadrement de la valeur de la conductivité thermique selon une étape e).

La précision des résultats obtenus dépend des écartements utilisés, lesquels sont donc préférentiellement correctement prédéterminés lors de la construction du dispositif 1.

Par ailleurs, le suivi temporel de l'évolution des températures $T_N$ peut permettre également l'acquisition de cinétiques de dépôt liées aux mécanismes d'encrassement.

La figure 6 illustre le cas de l'utilisation d'un dispositif 1 apparenté à une sonde multi-écartements simplifiée.

Dans ce cas, le premier ensemble E1, corps conductif supérieur, conduit l'énergie thermique sur tous les premiers corps O1. Les températures T1 à T4 sont les seules à être mesurées au cours d'une étape b), les étapes b') et c') décrites précédemment n'étant pas mises en oeuvre.

Ces températures T1 à T4, par leur variation détectée au cours d'une étape c), vont traduire la présence d'un encrassement *enc* comblant un espace libre entre un premier corps O1 et un deuxième corps O2, ici au niveau du quatrième couple $C_4$. Autrement dit, la valeur VT4 subit une variation brusque en comparaison aux valeurs VT1, VT2 et VT3 constantes.

La relation précédemment donnée concernant le flux thermique $\Phi_N$ ne s'applique pas dans ce cas de sorte que l'étape e) n'est pas mise en oeuvre. Toutefois, l'étape d) est mise en oeuvre et on retrouve de nouveau la relation $d_4 < e_{-enc} < d_3$.

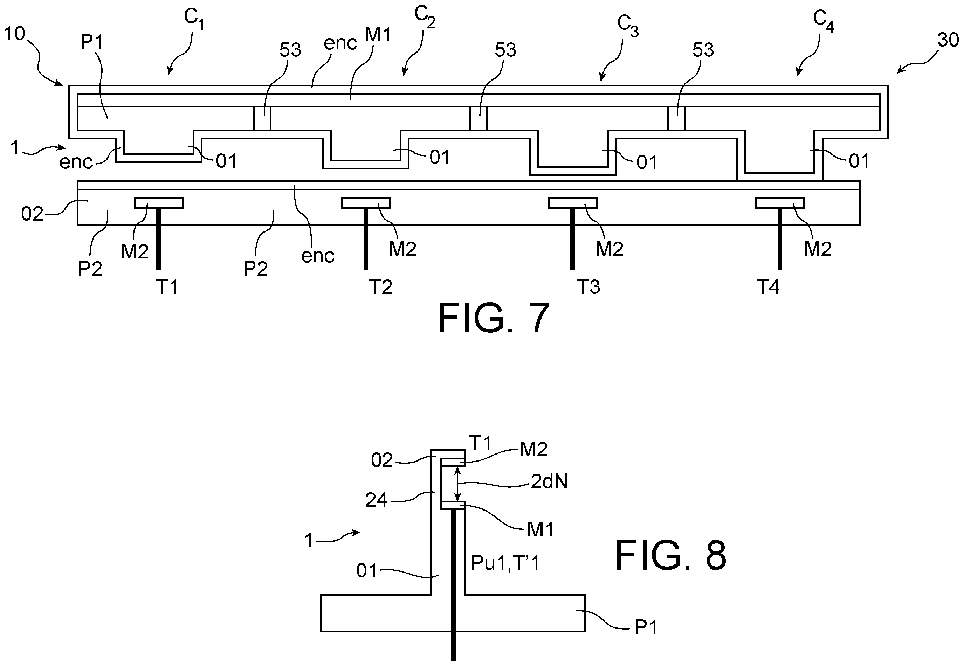

Par ailleurs, dans le cas général où $R_{2d} > Rth_{-enc}$, le flux appliqué peut risquer de se répartir de manière inhomogène entre les premiers corps O1, et préférentiellement ici vers le premier corps O1 du quatrième couple $C_4$, où la résistance est moins importante, ce qui peut alors fausser l'interprétation de la mesure de température $T_4$. Dans ce cas, le dispositif 1 peut comporter des matériaux isolants thermiquement S3 séparant les premiers corps O1 comme illustré sur la figure 7.

En outre, la figure 8 illustre, selon une vue de détails du même type que celle de la figure 1, la possibilité de monter le dispositif 1 au contact d'une seule paroi P1. En effet, le dispositif 1 conforme à l'invention est intrusif contrairement aux solutions de l'art antérieur présentées précédemment et afin de limiter le caractère intrusif du dispositif 1 dans le cas où il ne peut pas être intégré à une paroi P1 du composant 10, dans le cas d'un matériau isolant thermiquement par exemple, l'utilisation d'un dispositif 1 selon la figure 8, avec un premier corps O1 sous forme de branche disposée contre la paroi P1 et un deuxième corps O2 réduit uniquement à une extension 24 en appui sur la paroi P1 pour créer la distance $2d_N$ entre les premier M1 et deuxième M2 moyens, permet d'obtenir un encombrement limité. Sur cette figure 8, un seul couple d'écartement est représenté mais il faut noter que N couples d'écartement existent, formés chacun sur le même principe que représenté, alignés dans le plan perpendiculaire à la feuille.

Bien entendu, l'invention n'est pas limitée aux exemples de réalisation qui viennent d'être décrits. Diverses modifications peuvent y être apportées par l'homme du métier.

**Revendications**

1. Dispositif (1) de détection et de caractérisation d'un encrassement *(enc)* apte à se former sur au moins une paroi (P1, P2) d'un composant (10), soumise à un ou plusieurs échanges thermiques, **caractérisé en ce qu'**il comporte :

    - un unique premier moyen (M1) ou un nombre N de premiers moyens (M1) de dépôt d'énergie et de mesure de température, N étant un nombre entier supérieur ou égal à 2,
    - un nombre N de deuxièmes moyens (M2) de mesure de température, l'unique premier moyen (M1) étant associé à chacun des N deuxièmes moyens (M2) pour former N couples d'écartement ($C_1$, ..., $C_N$) du dispositif (1), ou chaque premier moyen (M1) des N premiers moyens (M1) étant associé deux à deux à un deuxième moyen (M2) des N deuxièmes moyens (M2) pour former un couple d'écartement ($C_1$, ..., $C_N$) et ainsi un total de N couples d'écartement ($C_1$, ..., $C_N$),
    l'unique premier moyen (M1) étant associé à N premiers corps (O1) ou chaque premier moyen (M1) des N premiers moyens (M1) étant associé deux à deux à un premier corps (O1) de N premiers corps (O1),
    chaque deuxième moyen (M2) des N deuxièmes moyens (M2) étant associé à un unique deuxième corps (O2) ou deux à deux à un deuxième corps (O2) de N deuxièmes corps (O2),
    les premiers corps (O1) étant solidaires et en contact direct avec une première paroi (P1) du composant (10), soumise à un ou plusieurs échanges thermiques, sur laquelle un encrassement *(enc)* est apte à se former, et le ou les deuxièmes corps (O2) étant sans contact direct avec ladite première paroi (P1),
    pour chaque couple d'écartement ($C_1$, ..., $C_N$), le premier corps (O1) et le deuxième corps (O2), respectivement associés au premier moyen (M1) du couple d'écartement ($C_1$, ..., $C_N$) et au deuxième moyen (M2) du couple d'écartement ($C_1$, ..., $C_N$) étant séparés d'une distance prédéfinie ($2d_1$, ..., $2d_N$) non nulle, de sorte que les premiers corps (O1) sont à distance du ou des deuxièmes corps (O2),
    les N distances prédéfinies ($2d_1$, ..., $2d_N$), associées au N couples d'écartement ($C_1$, ..., $C_N$), étant croissantes ou décroissantes,
    le ou les premiers moyens (M1) et les deuxièmes moyens (M2) étant raccordés à au moins un dispositif d'alimentation électrique (20), au moins un dispositif d'acquisition de données (21) et au moins un dispositif de supervision globale (23) pour la détection et la caractérisation de l'encrassement *(enc)* formé.

2. Dispositif selon la revendication 1, **caractérisé en ce que** le ou les premiers corps (O1) sont isolés thermiquement de ladite une première paroi (P1).

3. Dispositif selon la revendication 1 ou 2, **caractérisé en ce que** le ou les premiers moyens (M1) comportent au moins un élément chauffant et au moins une sonde de température, notamment de type sonde platine, et **en ce que** les deuxièmes moyens (M2) comportent au moins une sonde de température, notamment de type sonde platine.

4. Dispositif selon l'une des revendications précédentes, **caractérisé en ce que** lesdits au moins un dispositif d'alimentation électrique (20), au moins un dispositif d'acquisition de données (21) et au moins un dispositif de supervision globale (23) sont configurés pour permettre des alimentations électriques indépendantes, des mesures de température indépendantes et des générations d'énergie, notamment de puissance, indépendantes pour les N couples d'écartement ($C_1$, ..., $C_N$).

5. Dispositif selon l'une quelconque des revendications précédentes, **caractérisé en ce que** chaque premier corps (O1) est constitué par une première branche dont la longueur (l) est inférieure à celle de ladite première paroi (P1), et/ou **en ce que** chaque deuxième corps (O2) est constitué par une deuxième branche, chaque deuxième moyen (M2) des N deuxièmes moyens (M2) étant associé deux à deux à un deuxième corps (O2) de N deuxièmes corps (O2).

6. Dispositif selon la revendication 5, **caractérisé en ce que** chaque premier corps (O1) est constitué par une première branche et **en ce que** chaque deuxième corps (O2) est constitué par une deuxième branche, chaque couple d'écartement ($C_1$, ..., $C_N$) étant ainsi associé à un couple de première et deuxième branches espacées d'une distance prédéfinie ($2d_1$, ..., $2d_N$).

7. Dispositif selon l'une quelconque des revendications précédentes, **caractérisé en ce qu'**il comporte un unique premier moyen (M1) formant un seul et unique premier ensemble (E1) de dépôt d'énergie et de mesure de température commun à tous les couples d'écartement ($C_1$, ..., $C_N$).

8. Dispositif selon l'une quelconque des revendications précédentes, **caractérisé en ce que** les premiers corps (O1) sont formés par ladite première paroi (P1).

**9.** Dispositif selon l'une quelconque des revendications précédentes, **caractérisé en ce que** le ou les deuxièmes corps (O2) sont solidaires et en contact direct avec une deuxième paroi (P2) du composant (10), distincte et opposée à la première paroi (P1), soumise à un ou plusieurs échanges thermiques, sur laquelle un encrassement *(enc)* est apte à se former, le ou les deuxièmes corps (O2) étant notamment formés par ladite deuxième paroi (P2).

**10.** Dispositif selon l'une quelconque des revendications précédentes, **caractérisé en ce que** les premiers corps (O1) et/ou le ou les deuxièmes corps (O2) sont séparés entre eux par le biais de matériau isolant thermiquement (S3).

**11.** Ensemble (30), **caractérisé en ce qu'**il comporte :

    - un composant (10), notamment un échangeur thermique, dont au moins une paroi (P1, P2) est soumise à un ou plusieurs échanges thermiques,
    - un dispositif (1) selon l'une quelconque des revendications précédentes.

**12.** Procédé de détection et de caractérisation d'un encrassement *(enc)* apte à se former sur au moins une paroi (P1, P2) d'un composant (10), soumise à un ou plusieurs échanges thermiques, **caractérisé en ce qu'**il est mis en oeuvre au moyen d'un dispositif (1) selon l'une quelconque des revendications 1 à 10, et **en ce qu'**il comporte les étapes suivantes :

    a) effectuer un dépôt d'énergie, notamment un dépôt de puissance par effet Joule, par le biais du ou des premiers moyens (M1),
    b) effectuer une mesure de température (T1, T2, T3, T4) par le biais des deuxièmes moyens (M2),
    c) détecter une variation dans les mesures de température (T1, T2, T3, T4) effectuées par les deuxièmes moyens (M2) pour chaque couple d'écartement ($C_1$, ..., $C_N$),
    d) à partir de la détection de variation de température (T1, T2, T3, T4), déterminer une plage de valeurs de l'épaisseur ($e_{-enc}$) de l'encrassement *(enc)*.

**13.** Procédé selon la revendication 12, **caractérisé en ce qu'**il comporte, entre les étapes a) et b), simultanément ou non avec l'étape b), l'étape suivante :

    b') effectuer une mesure de température (T'1, T'2, T'3, T'4) par le biais du ou des premiers moyens (M1),
    et **en ce qu'**il comporte, entre les étapes b) et d), simultanément ou non avec l'étape c), l'étape suivante :
    c') détecter un écart de température (VT'1-VT1, VT'2-VT2, VT'3-VT3, VT'4-VT4) pour chaque couple d'écartement ($C_1$, ..., $C_N$) entre la température (T'1, T'2, T'3, T'4) mesurée par le biais du ou des premiers moyens (M1) et la température (T1, T2, T3, T4) mesurée par le biais des deuxièmes moyens (M2).

**14.** Procédé selon la revendication 13, **caractérisé en ce qu'**il comporte, après l'étape d), l'étape suivante :
    e) déterminer une plage de valeurs de la conductivité thermique ($\lambda_{-enc}$) de l'encrassement *(enc)*.

**Patentansprüche**

**1.** Vorrichtung (1) zum Entdecken und Charakterisieren einer Verschmutzung *(enc)*, die imstande ist, sich auf mindestens einer Wand (P1, P2) eines Bauteils (10) zu bilden, die einem oder mehreren Wärmeaustauschen ausgesetzt ist, **dadurch gekennzeichnet, dass** sie Folgendes beinhaltet:

    - ein einziges erstes Mittel (M1) oder eine Anzahl N an ersten Mitteln (M1) zum Energieauftrag und zur Temperaturmessung, wobei N eine ganze Zahl größer oder gleich 2 ist,
    - eine Anzahl N an zweiten Mitteln (M2) zur Temperaturmessung, wobei das einzige erste Mittel (M1) jedem der N zweiten Mittel (M2) zum Bilden von N Abstandspaaren ($C_1$, ..., $C_N$) der Vorrichtung (1) zugeordnet ist, oder jedes erste Mittel (M1) der N ersten Mittel (M1) paarweise einem zweiten Mittel (M2) der N zweiten Mittel (M2) zum Bilden eines Abstandspaares ($C_1$, ..., $C_N$), und somit einer Gesamtmenge von N Abstandspaaren ($C_1$, ..., $C_N$) zugeordnet ist,

    wobei das einzige erste Mittel (M1) N ersten Körpern (O1) zugeordnet ist, oder jedes erste Mittel (M1) der N ersten Mittel (M1) paarweise einem ersten Körper (O1) von N ersten Körpern (O1) zugeordnet ist, jedes zweite Mittel (M2) der N zweiten Mittel (M2) einem einzigen zweiten Körper (O2) zugeordnet ist, oder paarweise einem zweiten Körper (O2) aus N zweiten Körpern (O2) zugeordnet ist, wobei die ersten Körper (O1) fest mit einer ersten Wand (P1) des Bauteils (10) verbunden, oder in direktem Kontakt damit sind, die einem oder mehreren Wärmeaustauschen ausgesetzt ist, auf der eine Verschmutzung *(enc)* imstande ist, sich zu bilden, und der oder die zweite(n) Körper (O2) ohne direkten Kontakt mit der ersten Wand (P1) ist (sind),

für jedes Abstandspaar ($C_1$, ..., $C_N$) der erste Körper (O1) und der zweite Körper (O2), die jeweils dem ersten Mittel (M1) des Abstandspaares ($C_1$, ..., $C_N$) und dem zweiten Mittel (M2) des Abstandspaares ($C_1$, ..., $C_N$) zugeordnet sind, um eine vorbestimmte Distanz ($2d_1$, ..., $2d_N$) ungleich null getrennt sind, sodass die ersten Körper (O1) auf Distanz des oder der zweiten Körper (O2) sind, die N vorbestimmten Distanzen ($2d_1$, ..., $2d_N$), die den N Abstandspaaren ($C_1$, ..., $C_N$) zugeordnet sind, ansteigend oder absteigend sind,

das oder die erste(n) Mittel (M1) und die zweiten Mittel (M2) an mindestens eine Stromversorgungsvorrichtung (20), mindestens eine Datenerfassungsvorrichtung (21) und mindestens eine globale Überwachungsvorrichtung (23) zum Entdecken und Charakterisieren der gebildeten Verschmutzung *(enc)* angeschlossen sind.

2. Vorrichtung nach Anspruch 1, **dadurch gekennzeichnet, dass** der oder die erste(n) Körper (O1) von der ersten Wand (P1) wärmeisoliert ist (sind).

3. Vorrichtung nach Anspruch 1 oder 2, **dadurch gekennzeichnet, dass** das oder die erste(n) Mittel (M1) mindestens ein Heizelement und mindestens eine Temperatursonde, insbesondere in der Art Platinsonde beinhalten, und dadurch, dass die zweiten Mittel (M2) mindestens eine Temperatursonde, insbesondere in der Art einer Platinsonde beinhalten.

4. Vorrichtung nach einem der vorstehenden Ansprüche, **dadurch gekennzeichnet, dass** die mindestens eine Stromversorgungsvorrichtung (20), mindestens eine Datenerfassungsvorrichtung (21) und mindestens eine globale Überwachungsvorrichtung (23) konfiguriert sind, um unabhängige Stromversorgungen, unabhängige Temperaturmessungen, und unabhängige Energie-, insbesondere Leistungserzeugungen für die N Abstandspaare ($C_1$, ..., $C_N$) zu erlauben.

5. Vorrichtung nach einem der vorstehenden Ansprüche, **dadurch gekennzeichnet, dass** jeder erste Körper (O1) durch einen ersten Zweig geschaffen wird, dessen Länge (I) kleiner als jene der ersten Wand (P1) ist, und/oder dadurch, dass jeder zweite Körper (O2) durch einen zweiten Zweig geschaffen wird, wobei jedes zweite Mittel (M2) der N zweiten Mittel (M2) paarweise einem zweiten Körper (O2) von N zweiten Körpern (O2) zugeordnet ist.

6. Vorrichtung nach Anspruch 5, **dadurch gekennzeichnet, dass** jeder erste Körper (O1) durch einen ersten Zweig geschaffen wird, und dadurch, dass jeder zweite Körper (O2) durch einen zweiten Zweig geschaffen wird, wobei jedes Abstandspaar ($C_1$, ..., $C_N$) somit einem Paar an ersten und zweiten Zweigen zugeordnet ist, die um eine vorbestimmte Distanz ($2d_1$, ..., $2d_N$) beabstandet sind.

7. Vorrichtung nach einem der vorstehenden Ansprüche, **dadurch gekennzeichnet, dass** sie ein einziges erstes Mittel (M1) beinhaltet, das eine einzige und eindeutige Einheit (E1) zum Energieauftrag und zur Temperaturmessung bildet, die allen Abstandspaaren ($C_1$, ..., $C_N$) gemeinsam ist.

8. Vorrichtung nach einem der vorstehenden Ansprüche, **dadurch gekennzeichnet, dass** die ersten Körper (O1) durch die erste Wand (P1) gebildet werden.

9. Vorrichtung nach einem der vorstehenden Ansprüche, **dadurch gekennzeichnet, dass** der oder die zweite(n) Körper (O2) fest mit einer zweiten Wand (P2) des Bauteils (10) verbunden, oder in direktem Kontakt damit ist (sind), die sich von der ersten Wand (P1) unterscheidet und dieser gegenüberliegt, die einem oder mehreren Wärmeaustauschen ausgesetzt ist, auf der eine Verschmutzung *(enc)* imstande ist, sich zu bilden, wobei der oder die zweite(n) Körper (O2) insbesondere durch die zweite Wand (P2) gebildet wird (werden).

10. Vorrichtung nach einem der vorstehenden Ansprüche, **dadurch gekennzeichnet, dass** die ersten Körper (O1) und/oder der oder die zweite(n) Körper (O2) durch ein wärmeisolierendes Material (S3) voneinander getrennt sind.

11. Einheit (30), **dadurch gekennzeichnet, dass** sie Folgendes beinhaltet:

    - ein Bauteil (10), insbesondere einen Wärmeaustauscher, von dem mindestens eine Wand (P1, P2) einem oder mehreren Wärmeaustauschen ausgesetzt ist,
    - eine Vorrichtung (1) nach einem der vorstehenden Ansprüche.

12. Verfahren zum Entdecken und Charakterisieren einer Verschmutzung *(enc),* die imstande ist, sich auf mindestens einer Wand (P1, P2) eines Bauteils (10) zu bilden, die einem oder mehreren Wärmeaustauschen ausgesetzt ist, **dadurch gekennzeichnet, dass** es anhand einer Vorrichtung (1) nach einem der Ansprüche 1 bis 10 umgesetzt wird, und dadurch, dass es die folgenden Schritte beinhaltet:

    a) Durchführen eines Energieauftrags, insbesondere eines Leistungsauftrags durch Joule'schen Effekt, anhand des oder der ersten Mittel(s) (M1),

b) Durchführen einer Temperaturmessung (T1, T2, T3, T4) anhand der zweiten Mittel (M2),

c) Entdecken einer Variation in den Temperaturmessungen (T1, T2, T3, T4), die durch die zweiten Mittel (M2) durchgeführt werden, für jedes Abstandspaar ($C_1$, ..., $C_N$),

d) ausgehend von dem Entdecken einer Temperaturvariation (T1, T2, T3, T4) Bestimmen eines Wertebereichs für die Dicke ($e_{-enc}$) der Verschmutzung (enc).

13. Verfahren nach Anspruch 12, **dadurch gekennzeichnet, dass** es zwischen den Schritten a) und b) gleichzeitig mit Schritt b) oder nicht den folgenden Schritt beinhaltet:

b') Durchführen einer Temperaturmessung (T'1, T'2, T'3, T'4) anhand des oder der ersten Mittel(s) (M1),

und dadurch, dass es zwischen den Schritten b) und d), gleichzeitig mit Schritt c) oder nicht den folgenden Schritt beinhaltet:

c') Entdecken einer Temperaturabweichung (VT'1 - VT1, VT'2 - VT2, VT'3 - VT3, VT'4 - VT4) für jedes Abstandspaar ($C_1$, ..., $C_N$) zwischen der Temperatur (T'1, T'2, T'3, T'4), die anhand des oder der ersten Mittel(s) (M1) gemessen wird, und der Temperatur (T1, T2, T3, T4), die anhand der zweiten Mittel (M2) gemessen wird.

14. Verfahren nach Anspruch 13, **dadurch gekennzeichnet, dass** es nach dem Schritt d) den folgenden Schritt beinhaltet:

e) Bestimmen eines Wertebereichs für die Wärmeleitfähigkeit ($\lambda_{-enc}$) der Verschmutzung (enc).

**Claims**

1. A device (1) for detecting and characterising clogging (enc) capable of being formed on at least one wall (P1, P2) of a component (10), subjected to one or more heat exchanges, **characterised in that** it includes:

- a single first means (M1) or a number N of first means (M1) for depositing energy and measuring temperature, N being an integer greater than or equal to 2,

- a number N of second means (M2) for measuring temperature, the single first means (M1) being associated with each of the M second means (M2) to form N spacing pairs ($C_1$, ..., $C_N$) of the device (1), or each first means (M1) of the N first means (M1) being associated two by two with a second means (M2) of the N second means (M2) to form a spacing pair ($C_1$, ..., $C_N$)

and thus a total of N spacing pairs ($C_1$, ..., $C_N$),

the single first means (M1) being associated with N first bodies (O1) or each first means (M1) of the N first means (M1) being associated two by two with a first body (01) of N first bodies (O1),

each second means (M2) of the N second means (M2) being associated with a single second body (O2) or two by two with a second body (O2) of N second bodies (O2),

the first bodies (O1) being integral and in direct contact with a first wall (P1) of the component (10), subjected to one or more heat exchanges, on which clogging (enc) is capable of being formed, and the second body or bodies (O2) being without direct contact with said first wall (P1),

for each spacing pair ($C_1$, ..., $C_N$), the first body (01) and the second body (O2), respectively associated with the first means (M1) of the spacing pair ($C_1$, ..., $C_N$) and with the second means (M2) of the spacing pair ($C_1$, ..., $C_N$) being separated by a predefined non-zero distance ($2d_1$, ..., $2d_N$), so that the first bodies (O1) are at a distance from the second body or bodies (O2),

the N predefined distances ($2d_1$, ..., $2d_N$), associated with the N spacing pairs ($C_1$, ..., $C_N$), being increasing or decreasing,

the first means (M1) and the second means (M2) being connected to at least one power supply device (20), at least one data acquisition device (21) and at least one overall supervision device (23) for detecting and characterising clogging (enc) formed.

2. The device according to claim 1, **characterised in that** the first body or bodies (01) are thermally insulated from said first wall (P1).

3. The device according to claim 1 or 2, **characterised in that** the first means (M1) include at least one heating element and at least one temperature probe, especially of the platinum probe type, and **in that** the second means (M2) include at least one temperature probe, especially of the platinum probe type.

4. The device according to one of the preceding claims, **characterised in that** said at least one power supply device (20), at least one data acquisition device (21) and at least one overall supervision device (23) are configured to enable independent power supplies, independent temperature measurements and independent energy, especially power, generations for the N spacing pairs ($C_1$, ..., $C_N$).

5. The device according to any of the preceding claims, **characterised in that** each first body (01) consists of a first branch whose length (I) is lower than that of said first wall (P1), and/or **in that** each second body (O2) consists of a second branch, each second means (M2) of the N second means (M2) being associated two by two with a second body (O2) of N second bodies (O2).

6. The device according to claim 5, **characterised in that** each first body (01) consists of a first branch and **in that** each second body (O2) consists of a second branch, each spacing pair ($C_1$, ..., $C_N$) being thus associated with a pair of first and second branches spaced apart by a predefined distance ($2d_1$, ..., $2d_N$).

7. The device according to any of the preceding claims, **characterised in that** it includes a single first means (M1) forming one and a single first assembly (E1) for depositing energy and measuring temperature common to all the spacing pairs ($C_1$, ..., $C_N$).

8. The device according to any of the preceding claims, **characterised in that** the first bodies (O1) are formed by said first wall (P1).

9. The device according to any of the preceding claims, **characterised in that** the second body or bodies (O2) are integral and in direct contact with a second wall (P2) of the component (10) distinct and opposite to the first wall (P1), subjected to one or more heat exchanges, on which clogging *(enc)* is capable of being formed, the second body or bodies (O2) being especially formed by said second wall (P2).

10. The device according to any of the preceding claims, **characterised in that** the first bodies (O1) and/or the second body or bodies (O2) are separated from each other through thermally insulating material (S3).

11. An assembly (30), **characterised in that** it includes:

    - a component (10), especially a heat exchanger, at least one wall (P1, P2) of which is subjected to one or more heat exchanges,
    - a device (1) according to any of the preceding claims.

12. A method for detecting and characterising clogging *(enc)* capable of being formed on at least one wall (P1, P2) of a component (10), subjected to one or more heat exchanges, **characterised in that** it is implemented by means of a device (1) according to any of claims 1 to 10, and **in that** it includes the following steps:

    a) performing energy deposition, especially power deposition by Joule effect, through the first means (M1),
    b) performing a measurement of temperature (T1, T2, T3, T4) through the second means (M2),
    c) detecting a variation in the measurements of temperature (T1, T2, T3, T4) performed by the second means (M2) for each spacing pair ($C_1$, ..., $C_N$),
    d) from the detection of the variation in temperature (T1, T2, T3, T4), determining a range of values of the thickness ($e_{-enc}$) of clogging *(enc)*.

13. The method according to claim 12, **characterised in that** it includes, between steps a) and b), simultaneously or not with step b), the following step:

    b') performing a measurement of temperature (T'1, T'2, T'3, T'4) through the first means (M1), and it that it includes, between steps b) and d), simultaneously or not with step c), the following step:
    c') detecting a temperature deviation (VT'1-VT1, VT'2-VT2, VT'3-VT3, VT'4-VT4) for each spacing pair ($C_1$, ..., $C_N$) between the temperature (T'1, T'2, T'3, T'4) measured through the first means (M1) and the temperature (T1, T2, T3, T4) measured through the second means (M2).

14. The method according to claim 13, **characterised in that** it includes, after step d), the following step:
    e) determining a range of values of the thermal conductivity ($\lambda_{-enc}$) of clogging *(enc)*.

FIG. 1

FIG. 2

EP 3 771 879 B1

FIG. 3

EP 3 771 879 B1

FIG. 4

EP 3 771 879 B1

FIG. 5

FIG. 6

**FIG. 7**

**FIG. 8**

EP 3 771 879 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2009153323 A1

- WO 2007099240 A1